# EUROPÄISCHE PATENTANMELDUNG

(11) **EP 1 523 083 A1**
(43) Veröffentlichungstag der Anmeldung: **13.04.2005**
(21) Anmeldenummer: 03103698.1
(22) Anmeldetag: 06.10.2003
(51) Int. Cl.: H02J 7/14, B60R 16/02

(54) **Spannungsversorgungssystem in einem Kraftfahrzeug mit einem Zwei-Spannungs-Bordnetz und Verfahren zur Versorgung eines solchen Bordnetzes**

(71) Anmelder: Ford Global Technologies, LLC, A subsidary of Ford Motor Company, Dearborn, MI 48126 (US)
(72) Erfinder: Gaedt, Lutz Peter, 52499, Baesweiler (DE); Kok, Daniel Benjamin, 6343 CA, Klimmen (NL); Karden, Eckhard, 52066, Aachen (DE)
(74) Vertreter: Drömer, Hans-Carsten, Dr.-Ing.

(57) **Zusammenfassung**

Es wird ein Spannungsversorgungssystem für ein Kraftfahrzeug beschrieben, bei welchem ein Generator (G) über einen Schalter (S) entweder mit einem ersten Bordnetz (N1) mit einer kleineren Betriebsspannung (typischerweise 14 V) oder mit einem zweiten Bordnetz (N2) mit einer höheren Betriebsspannung (typischerweise 42 V) gekoppelt wird. Die Ausgangsspannung des Generators (G) wird von einem Regler (C) entsprechend dem aktuell angeschlossenen Bordnetz eingestellt. Batterien (B1, B2) sorgen für eine Zwischenspeicherung elektrischer Energie. Vorzugsweise erfolgt das Umschalten von einem Bordnetz auf ein anderes im stromlosen Zustand des Schalters (S).

## Beschreibung

Die Erfindung betrifft ein Spannungsversorgungssystem eines Kraftfahrzeuges für ein erstes Bordnetz mit einer kleineren Versorgungsspannung und ein zweites Bordnetz mit einer höheren Versorgungsspannung, welches einen Generator sowie Energiespeicher in den beiden Bordnetzen enthält. Ferner betrifft sie ein Verfahren zur Versorgung eines ersten Bordnetzes eines Kraftfahrzeuges mit einer niedrigeren und eines zweiten Bordnetzes mit einer höheren Versorgungsspannung, wobei die Spannung von einem Generator erzeugt und in den Bordnetzen zwischengespeichert wird.

In modernen Kraftfahrzeugen kommen zunehmend elektrische und elektronische Geräte zum Einsatz, was einen entsprechenden Bedarf an elektrischer Energie mit sich bringt. Die ausreichende Versorgung der Geräte erfordert zudem eine höhere Versorgungsspannung als die 14 Volt von Bordnetzen mit einer herkömmlichen Lichtmaschine und Batterie. Gemäß dem gegenwärtigen Stand von Standardisierungsbemühungen ist daher die Bereitstellung eines Bordnetzes mit einer Versorgungsspannung von ca. 42 V vorgesehen. Auch andere Spannungen werden in Betracht gezogen, insbesondere sofern nur die Versorgung einzelner System mit hohem Leistungsbedarf notwendig ist.

Die Einführung einer neuen Versorgungsspannung in Kraftfahrzeugen wird zunächst begrenzt für einige isolierte Anwendungen mit geringen Anforderungen hinsichtlich der Stabilität und der Standardisierung von Verbindungen und Sicherungen erfolgen, wobei das bisherige 14 Volt-System parallel beibehalten werden wird. Daher besteht ein Bedarf für ein Spannungsversorgungssystem eines Kraftfahrzeuges, welches eine niedrigere Spannung V1 und eine höhere Spannung V2 bereitstellen kann. Für diesen Zweck bekannte Spannungsversorgungssysteme in Kraftfahrzeugen mit zwei Bordnetzen koppeln den Generator nur an das zweite Bordnetz mit der höheren Versorgungsspannung V2. Daher wird ein Gleichspannungswandler oder eine zweite Lichtmaschine benötigt, um zusätzlich die Spannung für das herkömmliche 14 Volt-System bereitzustellen. Die genannten Einrichtungen verursachen dabei entsprechende Zusatzkosten.

Vor diesem Hintergrund war es Aufgabe der vorliegenden Erfindung, Mittel für eine zuverlässige und kostengünstige Versorgung eines Kraftfahrzeugs mit verschiedenen Spannungsniveaus bereitzustellen.

Diese Aufgabe wird durch ein Spannungsversorgungssystem mit den Merkmalen des Anspruchs 1 sowie durch ein Verfahren mit den Merkmalen des Anspruchs 7 gelöst. Vorteilhafte Ausgestaltungen sind in den Unteransprüchen enthalten.

Das erfindungsgemäße Spannungsversorgungssystem für ein erstes Bordnetz eines Kraftfahrzeuges mit einer niedrigeren bzw. kleineren Versorgungsspannung (z. B. ca. 14 V) und ein zweites Bordnetz des Kraftfahrzeuges mit einer höheren bzw. größeren Versorgungsspannung (z. B. ca. 42 V) enthält einen Generator, welcher von der Brennkraftmaschine bereitgestellte mechanische Energie in elektrische Energie umwandelt. Ferner enthält es als Puffer jeweils mindestens einen Energiespeicher in den beiden Bordnetzen, in welchem vom Generator bereitgestellte elektrische Energie bis zu ihrem Verbrauch zwischengespeichert werden kann. Das Spannungsversorgungssystem ist dadurch gekennzeichnet, daß der Generator über einen Schalter wahlweise mit dem ersten oder mit dem zweiten Bordnetz gekoppelt werden kann. Weiterhin sind der Generator und der genannte Schalter mit einem Regler verbunden, welcher dahingehend ausgebildet ist, den Schalter zu betätigen und die Ausgangsspannung des Generators in Abhängigkeit vom Schalterzustand bzw. vom momentan angeschlossenen Bordnetz passend einzustellen.

Bei dem vorgeschlagenen Spannungsversorgungssystem wird somit der Generator zu einem gegebenen Zeitpunkt immer nur mit einem der beiden Bordnetze verbunden, wobei seine Ausgangsspannung dem Bedarf des angeschlossenen Bordnetzes angepaßt wird. Das System kann sehr kostengünstig ausgelegt werden, da keine Zusatzeinrichtungen wie Gleichspannungswandler oder eine zweite Lichtmaschine erforderlich sind. Die Energiespeicher müssen ohnehin in den Bordnetzen zur Verfügung gestellt werden, um die Stromversorgung während Spitzenbelastungen sicherzustellen und die Effizienz der Netze zu steigern. Sie können somit ohne Zusatzkosten dazu ausgenutzt werden, die Energieversorgung in einem Bordnetz zu gewährleisten, wenn dieses gerade nicht an den Generator gekoppelt ist.

Für die Auslegung des Reglers, welcher den abwechselnden Anschluß des Generators an die beiden Bordnetze und dessen Ausgangsspannung kontrolliert, gibt es verschiedene Möglichkeiten. Im einfachsten Fall könnte der Regler den Generator nach einem festen Zeitschema umschalten. Vorzugsweise wird der Regler indes so ausgelegt, daß er die Beachtung bzw. Optimierung von vorgegebenen Kriterien gewährleistet. Insbesondere kann der Regler die Stellung des Schalters und die Ausgangsspannung des Generators so kontrollieren, daß die momentanen Leistungsanforderungen der beiden Bordnetze, die Ladungszustände der Energiespeicher in den Bordnetzen und/oder das Ziel einer Minimierung des Kraftstoffverbrauches berücksichtigt werden.

Gemäß einer Weiterbildung des Spannungsversorgungssystems ist der Regler dahingehend ausgebildet, vor einer Betätigung des Schalters zur Umschaltung der Generatorspannung von einem Bordnetz auf ein anderes die Generatorspannung zu reduzieren. Insbesondere kann die Generatorspannung auf einen Wert von Null oder nahe bei Null - jedenfalls einen Wert unterhalb der niedrigeren der beiden aktuellen Bordnetzspannungen - zurückgefahren werden. Dies hat den Vorteil, daß im Moment des Umschaltens kein Strom über den Schalter fließt und seine Belastung entsprechend gering ist.

Bei den Energiespeichern in den Bordnetzen kann es sich um alle für eine Pufferung elektrischer Energie geeigneten Einrichtungen handeln. Insbesondere können die Energiespeicher eine (Blei-)Akkumulatorbatterie und/oder einen Superkondensator umfassen. Sogenannte Superkondensatoren sind durch eine hohe Leistungsdichte von typischerweise 1-3 kWh/kg, eine hohe Zyklusfähigkeit und eine hohe mechanische Robustheit gekennzeichnet.

Der Schalter des Spannungsversorgungssystems kann insbesondere als eine Halbleiterschaltung ausgebildet sein, wobei diese vorzugsweise intelligente Zusatzfunktionen wie etwa eine Selbstdiagnose und/oder die Detektion einer Überschreitung von vorgegebenen Stromschwellen in einem der Bordnetze ausführt. Auf diese Weise kann die Sicherheit und Zuverlässigkeit des Systems erheblich erhöht werden.

Die Ausgangsspannung des Generators kann insbesondere durch eine Feldschwächung kontrolliert werden, wobei diese z. B. durch eine verminderte Spulenerregung und/oder eine feldorientierte Regelung bewirkt werden kann. Insbesondere kann hiermit die niedrigere Ausgangsspannung des Generators auch bei höheren Drehzahlen der Brennkraftmaschine des Kraftfahrzeuges beibehalten werden. Eine Abschaltung der Feldschwächung bei höheren Drehzahlen führt dann zur Erzeugung der größeren Ausgangsspannung des Generators.

Die Erfindung betrifft ferner ein Verfahren zur Versorgung eines ersten Bordnetzes eines Kraftfahrzeuges mit einer kleineren und eines zweiten Bordnetzes des Kraftfahrzeuges mit einer höheren Versorgungsspannung, wobei die Spannungen von einem Generator erzeugt und in den Bordnetzen zwischengespeichert werden. Die kleinere Versorgungsspannung kann z. B. ca. 14 V und die höhere Versorgungsspannung ca. 42 V betragen. Das Verfahren ist dadurch gekennzeichnet, daß die Ausgangsspannung des Generators abwechselnd zwischen zwei Niveaus umgestellt und dabei jeweils nur einem der Bordnetze zugeführt wird.

Das Verfahren implementiert in allgemeiner Form die mit einem Spannungsversorgungssystem der oben beschriebenen Art ausführbaren Schritte. Hinsichtlich der Eigenschaften, Vorteile und Weiterbildungen des Verfahrens wird daher auf die obige Beschreibung verwiesen. Insbesondere kann das Verfahren verhältnismäßig einfach umgesetzt werden, da keine Gleichspannungswandlung oder zusätzliche Spannungserzeugung erforderlich ist, um zwei Bordnetze bei verschiedenen Versorgungsspannungen zu unterhalten.

Während eines Umschaltvorganges, d. h., wenn der Ausgang des Generators vom ersten Bordnetz an das zweite Bordnetz gelegt wird oder umgekehrt, wird die Ausgangsspannung des Generators vorzugsweise reduziert. Insbesondere kann sie bis auf Null oder einen Wert nahe Null - jedenfalls einen Wert unterhalb der niedrigeren der beiden aktuellen Bordnetzspannungen - zurückgeführt werden. Das Umschalten kann dann völlig oder fast stromlos erfolgen.

Die vom Generator erzeugte Ausgangsspannung hängt in der Regel von der Drehzahl der Brennkraftmaschine ab, die den Generator mechanisch antreibt. Bei verhältnismäßig niedrigen Drehzahlen ist dabei die vom Generator erzeugbare Spannung noch oben begrenzt. Vorteilhafterweise wird daher bei Drehzahlen der Brennkraftmaschine des Kraftfahrzeuges unterhalb einer vorgegebenen Schwelle nur das erste der Bordnetze mit der kleineren Versorgungsspannung versorgt. Erst wenn die Drehzahl die genannte Schwelle überschreitet, wird auch ein Anschluß des Generators an das zweite Bordnetz zugelassen.

Im Folgenden wird die Erfindung mit Hilfe der Figuren beispielhaft erläutert. Es zeigen
- Fig. 1: einen Schaltplan eines erfindungsgemäßen Spannungsversorgungssystems für ein Kraftfahrzeug, und
- Fig. 2: die nutzbaren Ausgangsspannungen des Generators von Figur 1 in Abhängigkeit von der Drehzahl.

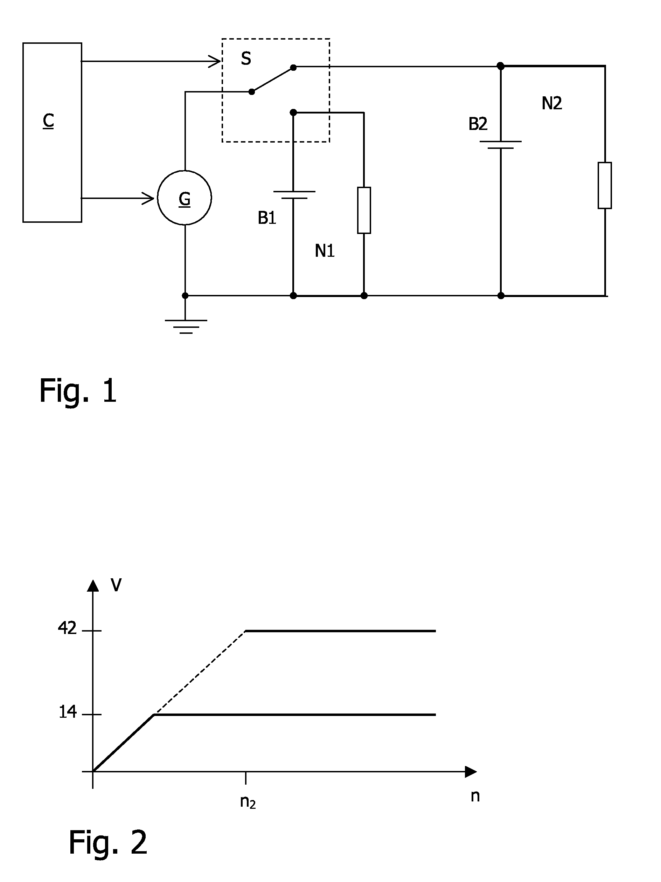

In Figur 1 ist schematisch der Schaltplan einer Ausführungsform eines erfindungsgemäßen Spannungsversorgungssystems für ein Kraftfahrzeug dargestellt. Das Kraftfahrzeug enthält dabei zwei elektrische Bordnetze N1 und N2, die mit einer kleineren Versorgungsspannung V1 = 14 Volt bzw. einer höheren Versorgungsspannung V2 = 42 Volt betrieben werden. Die Versorgungsspannungen dürfen jeweils innerhalb gewisser Grenzen V1ₘᵢₙ ≤ V1 ≤ V1ₘₐₓ und V2ₘᵢₙ ≤ V2 ≤ V2ₘₐₓ variieren. In den beiden Bordnetzen N1, N2 ist jeweils eine Batterie B1 bzw. B2 (Akkumulatorbatterie, Superkondensator oder dergleichen) zur Zwischenspeicherung elektrischer Energie vorgesehen.

Die Erzeugung der elektrischen Energie für die Bordnetze N1, N2 erfolgt durch einen Generator G, bei dem es sich z. B. um eine herkömmliche Lichtmaschine (Klauenpolgenerator) oder um einen integrierten bzw. kombinierten Starter/Generator handeln kann. Der Generator ist typischerweise direkt oder über einen Riemen an die Kurbelwelle gekoppelt. Der Generator G wird von dem Verbrennungsmotor des Kraftfahrzeuges (nicht dargestellt) angetrieben und wandelt die aufgenommene mechanische Energie in elektrische Energie um.

Der Ausgang des Generators G kann über einen Schalter S wahlweise dem ersten Bordnetz N1 oder dem zweiten Bordnetz N2 zugeführt werden. Dabei ist der Generator G dahingehend ausgebildet, daß seine Ausgangsspannung entsprechend den Anforderungen des jeweils angeschlossenen Bordnetzes eingestellt werden kann. Die Kontrolle des Schalters S sowie des Generators G erfolgt diesbezüglich durch einen Regler C. Die Energiespeicher B1 und B2 werden dazu verwendet, als Puffer elektrische Energie für die Zeiten zwischenzuspeichern, zu denen der Generator an das jeweils andere Bordnetz angeschlossen ist.

Der Generator G muß die kleinere Ausgangsspannung V1 von 14 V auch bei relativ niedrigen Motordrehzahlen bereitstellen und wird daher vorteilhafterweise bei allen höheren Motordrehzahlen in einem Regime der Feldschwächung betrieben, welches wiederum durch eine verringerte Erregung oder eine feldorientierte Regelung realisiert werden kann. Eine Beseitigung der Feldschwächung bei hinreichend großen Motordrehzahlen führt dann zu höheren Ausgangsspannungen des Generators G, welche beim Maximum annähernd proportional zur Motordrehzahl sind.

Figur 2 zeigt in diesem Zusammenhang die möglichen Ausgangsspannungen V (vertikale Achse) des Generators G in Abhängigkeit von der Drehzahl n des Verbrennungsmotors bzw. des Generatoreingangs. Unterhalb einer Schwellwert-Drehzahl *n*₂ ≈ *V2*ₘᵢₙ/*V1* · *n*_{idle} (V2 ₘᵢₙ = zulässiges Minimum der höheren Versorgungsspannung; *n*_{idle} = Leerlaufdrehzahl) ist der Generator G ausschließlich an das erste, 14 Volt-Bordnetz N1 angeschlossen. Bei höheren Drehzahlen kann die Ausgangsspannung des Generators G unter Beachtung der Leistungsanforderungen in beiden Bordnetzen N1 und N2, der Ladezustände der Batterien B1 und B2, des Energieverbrauches (Kraftstoffökonomie) sowie anderer Aspekte frei zwischen den Niveaus von 14 V und 42 V gewählt werden.

Die Generatoreffizienz wird bei dem beschriebenen System gegenüber herkömmlichen 14 Volt Lichtmaschinen verbessert, da die relativen Verluste sowohl im Erregungsstrom als auch im Gleichrichter bei höheren Spannungen reduziert werden. Die Kosten des Spannungsversorgungssystems sind verhältnismäßig niedrig, da gegenüber bekannten Systemen auf Gleichrichter oder einen zweiten Generator verzichtet werden kann. Die erforderliche Bereitstellung von zwei Energiespeichern B1, B2 führt zu keinen Zusatzkosten, da diese ohnehin aus Gründen der Systemsicherheit und Effizienzsteigerung vorgesehen werden.

Der Regler C reduziert die Ausgangsspannung des Generators G vorzugsweise rampenförmig auf eine Einstellspannung V_{G} ≤ V1, bevor er eine Umstellung des Schalters S ansteuert. Auf diese Weise kann der Schalter als ein Nullstromschalter fungieren, welcher im Moment des Umschaltens keinen Strom führt.

Des Weiteren kann der Schalter S als eine intelligente Halbleiterschaltung ausgeführt sein, welche zusätzliche Sicherheitsfunktionen wie beispielsweise eine Selbstdiagnose oder die Detektion eines zu hohen Stromes (Kurzschluß) in einem der beiden elektrischen Bordnetze N1, N2 durchgeführt.

Wenn der Energiespeicher B2 im zweiten Bordnetz N2 ein Superkondensator ist, wird die Ausgangsspannung des Generators bei Anschluß an das zweite Bordnetz vorteilhafterweise abhängig vom momentanen Energieverbrauch im zweiten Bordnetz und der Drehzahl der Brennkraftmaschine so geregelt, daß die relative Zeitdauer, für die der Generator an das zweite Bordnetz angeschlossen ist, in Hinblick auf den Energieverbrauch des Kraftfahrzeuges optimal ist.

## Patentansprüche

1. Spannungsversorgungssystem in einem Kraftfahrzeug für ein erstes Bordnetz (N1) mit einer kleineren Versorgungsspannung (V1) und ein zweites Bordnetz (N2) mit einer höheren Versorgungsspannung (V2), enthaltend einen Generator (G) sowie Energiespeicher (B1, B2) in den beiden Bordnetzen,
**dadurch gekennzeichnet, daß**
der Generator (G) über einen Schalter (S) wahlweise mit dem ersten oder dem zweiten Bordnetz (N1, N2) gekoppelt werden kann, und daß der Generator (G) und der Schalter (S) mit einem Regler (C) verbunden sind, welcher den Schalter (S) betätigen und die Ausgangsspannung des Generators (G) in Abhängigkeit vom angeschlossenen Bordnetz (N1, N2) einstellen kann.

2. Spannungsversorgungssystem nach Anspruch 1,
**dadurch gekennzeichnet, daß**
der Regler (C) dahingehend ausgebildet ist, die Stellung des Schalters (S) und die Ausgangsspannung des Generators (G) in Hinblick auf die Leistungsanforderungen der Bordnetze (N1, N2), die Ladungszustände der Energiespeicher (B1, B2) und/oder die Optimierung des Kraftstoffverbrauches einzustellen.

3. Spannungsversorgungssystem nach Anspruch 1 oder 2,
**dadurch gekennzeichnet, daß**
der Regler (C) dahingehend ausgebildet ist, vor einer Betätigung des Schalters (S) die Ausgangsspannung des Generators (G) zu reduzieren.

4. Spannungsversorgungssystem nach mindestens einem der Ansprüche 1 bis 3,
**dadurch gekennzeichnet, daß**
die Energiespeicher (B1, B2) eine Akkumulatorbatterie und/oder einen Superkondensator umfassen.

5. Spannungsversorgungssystem nach mindestens einer Ansprüche 1 bis 4,
**dadurch gekennzeichnet, daß**
der Schalter (S) als Halbleiterschalter ausgebildet ist, welcher Zusatzfunktionen wie eine Selbstdiagnose und/oder die Detektion einer Stromüberschreitung in einem der Bordnetze (N1, N2) ausführt.

6. Spannungsversorgungssystem nach mindestens einem der Ansprüche 1 bis 5,
**dadurch gekennzeichnet, daß**
die Ausgangsspannung des Generators (G) über eine Feldschwächung kontrolliert wird.

7. Verfahren zur Versorgung eines ersten Bordnetzes (N1) eines Kraftfahrzeuges mit einer kleineren (V1) und eines zweiten Bordnetzes (N2) des Kraftfahrzeuges mit einer höheren Versorgungsspannung (V2), wobei die Spannungen von einem Generator (G) erzeugt und in den Bordnetzen (N1, N2) zwischengespeichert werden,
**dadurch gekennzeichnet, daß**
die Ausgangsspannung des Generators (G) abwechselnd zwischen zwei Niveaus umgestellt und jeweils einem der Bordnetze (N1, N2) zugeführt wird.

8. Verfahren nach Anspruch 7,
**dadurch gekennzeichnet, daß**
die kleinere Spannung (V1) ca. 14 V und die höhere Spannung (V2) ca. 42 V beträgt.

9. Verfahren nach Anspruch 7 oder 8,
**dadurch gekennzeichnet, daß**
die Ausgangsspannung des Generators (G) während eines Umstellvorganges reduziert wird.

10. Verfahren nach mindestens einem der Ansprüche 7 bis 9,
**dadurch gekennzeichnet, daß**
bei Drehzahlen der Brennkraftmaschine des Kraftfahrzeuges unterhalb einer vorgegebenen Schwelle (n₂) nur das erste Bordnetz (N1) mit der kleineren Versorgungsspannung (V1) versorgt wird.
